# FASCICULE DE BREVET EUROPEEN

(11) **EP 3 372 562 B1**
(45) Date de publication et mention de la délivrance du brevet: **05.05.2021**
(21) Numéro de dépôt: 18159587.7
(22) Date de dépôt: 01.03.2018
(51) Int. Cl.: C03B 9/32

(54) **PROCEDE DE FABRICATION D'UN RECIPIENT EN VERRE ET INSTALLATION DE MISE EN OEUVRE AFFERENTE**
HERSTELLUNGSVERFAHREN EINES GLASBEHÄLTERS, UND ANLAGE ZUR UMSETZUNG DIESES VERFAHRENS
METHOD FOR PRODUCING A GLASS CONTAINER AND ASSOCIATED PLANT FOR CARRYING OUT SAME

(30) Priorité: 10.03.2017 FR 1751982
(43) Date de publication de la demande: 12.09.2018
(73) Titulaire: Verescence France, 92800 Puteaux (FR)
(72) Inventeur: GUYOT, Laurent, Pierre, Marie, 59161 ESCAUDOEUVRES (FR)
(74) Mandataire: Weber, Jean-François

(56) Documents cités:
- WO-A1-2014/044669
- FR-A- 397 261
- US-A- 1 230 368

## Description

La présente invention se rapporte au domaine général des procédés de fabrication de récipients en verre. L'invention concerne également le domaine technique des installations de fabrication destinées à la mise en œuvre de tels procédés.

L'invention concerne plus précisément un procédé de fabrication d'un récipient en verre à partir d'une masse de verre fondu, comprenant une étape de formage de ladite masse de verre fondu pour obtenir un récipient semi-fini comprenant une enveloppe en verre qui délimite une cavité intérieure et présente une face interne disposée en regard de ladite cavité intérieure et une face externe opposée.

L'invention concerne également une installation de fabrication d'un récipient en verre à partir d'une masse de verre fondu, comprenant un poste de formage de ladite masse de verre fondu pour obtenir un récipient semi-fini comprenant une enveloppe en verre qui délimite une cavité intérieure et présente une face interne disposée en regard de ladite cavité intérieure et une face externe opposée.

Dans le domaine des procédés de fabrication de récipients en verre, il est connu de recourir à une étape de formage d'une masse de verre fondu, par exemple par pressage ou soufflage de ladite masse de verre fondu (paraison ou « *gob* »), pour obtenir un récipient semi-fini comprenant une enveloppe en verre délimitant une cavité intérieure et présentant une face interne disposée en regard de ladite cavité intérieure et une face externe opposée. Un tel récipient semi-fini préfigure le récipient qui sera finalement obtenu après refroidissement dudit récipient semi-fini à une température à laquelle la totalité du verre qui le constitue affecte un état solide, figé et non déformable.

On connaît également des procédés au cours desquels une conformation particulière est impartie à ladite face interne, par exemple à l'aide d'un poinçon de formage portant à sa surface un motif ou une forme en relief spécifique, ou encore à l'aide d'une buse d'injection de gaz sous pression qui est introduite au sein de ladite cavité intérieure et débouche à proximité de ladite face interne pour déformer localement cette dernière alors que le verre qui la forme est encore suffisamment malléable.

Il est de la sorte notamment possible d'obtenir des récipients en verre dont l'épaisseur de la paroi latérale et / ou du fond n'est pas constante, du fait d'une répartition spatiale non homogène du verre. De tels procédés sont notamment mis en œuvre pour la fabrication de récipients destinés à contenir des substances cosmétiques ou du parfum, afin de conférer auxdits récipients un aspect visuel esthétique et distinctif, et à mettre en valeur leur contenu.

Si de tels procédés, ainsi que les installations destinées à leur mise en œuvre, offrent globalement satisfaction, ils n'en présentent pas moins certains inconvénients.

En effet, l'usage d'un poinçon de formage est généralement réservé à la fabrication de récipients en verre à bague large, tels que des pots, et se prête difficilement, voire pas du tout, à la fabrication de récipients en verre à bague étroite, tels que des bouteilles ou des flacons.

Le recours à une buse d'injection de gaz sous pression, s'il est généralement approprié dans le cas de récipients en verre à bague étroite, présuppose cependant quant à lui la mise en œuvre de moyens techniques spécifiques potentiellement coûteux et pouvant nécessiter des réglages fastidieux, de nature à engendrer une augmentation notable tant des coûts que des durées de production.

Le document WO 2014/044669 décrit un procédé, et une installation correspondante, de fabrication d'un article creux en verre comportant une paroi latérale de faible épaisseur, procédé dans lequel on introduit dans un moule ébaucheur une paraison de verre fondu, on forme dans le moule ébaucheur une ébauche de l'article à partir de la paraison, on transfère l'ébauche de l'article dans un moule finisseur, et on forme l'article dans le moule finisseur. Au cours du formage de l'article, on dirige un excédent de verre vers l'extérieur de la paroi latérale de l'article pour former un bombé convexe et on élimine le bombé pour donner à la paroi latérale de l'article une épaisseur sensiblement constante.

Les objets assignés à l'invention visent en conséquence à porter remède aux inconvénients exposés dans ce qui précède et à proposer un nouveau procédé qui permet de fabriquer de manière simple et peu couteuse, un récipient en verre présentant un aspect visuel fortement esthétique et distinctif, et une nouvelle installation dédiée à la mise en œuvre de ce nouveau procédé.

Un autre objet de l'invention vise à proposer un nouveau procédé de fabrication de récipients en verre et une nouvelle installation dédiée qui autorisent des cadences de fabrication élevées.

Les objets assignés à l'invention sont atteints à l'aide d'un procédé de fabrication d'un récipient en verre à partir d'une masse de verre fondu, comprenant une étape de formage de ladite masse de verre fondu pour obtenir un récipient semi-fini comprenant une enveloppe en verre qui délimite une cavité intérieure et présente une face interne disposée en regard de ladite cavité intérieure et une face externe opposée, et caractérisé en ce qu'il comprend une étape de refroidissement du récipient semi-fini, au cours de laquelle ledit récipient semi-fini est amené dans un état transitoire dans lequel le verre formant ladite face externe est suffisamment visqueux pour que ladite face externe ne se déforme sensiblement pas sous l'effet de la gravité, tandis que le verre formant ladite face interne est encore suffisamment fluide pour pouvoir au contraire autoriser la déformation de ladite face interne sous l'effet de la gravité, et en ce qu'il comprend, pendant que le récipient semi-fini se trouve dans ledit état transitoire, une opération de façonnage de ladite face interne, au cours de laquelle le récipient semi-fini est maintenu, pendant un temps prédéterminé, dans une position inclinée par rapport à sa position verticale debout pour entraîner une modification de la conformation de ladite face interne par déplacement du verre sous l'effet de la gravité.

Les objets assignés à l'invention sont également atteints à l'aide d'une installation de fabrication d'un récipient en verre à partir d'une masse de verre fondu, comprenant un poste de formage de ladite masse de verre fondu pour obtenir un récipient semi-fini comprenant une enveloppe en verre qui délimite une cavité intérieure et présente une face interne disposée en regard de ladite cavité intérieure et une face externe opposée, et caractérisée en ce qu'elle comprend des moyens de refroidissement, permettant d'amener ledit récipient semi-fini dans un état transitoire selon lequel le verre formant ladite face externe est suffisamment visqueux pour que ladite face externe ne se déforme sensiblement pas sous l'effet de la gravité, tandis que le verre formant ladite face interne est encore suffisamment fluide pour pouvoir au contraire autoriser la déformation de ladite face interne sous l'effet de la gravité, et en ce qu'elle comprend des moyens de façonnage de ladite face interne conçus pour maintenir, pendant un temps prédéterminé, ledit récipient semi-fini dans une position inclinée par rapport à sa position verticale debout pour entraîner une modification de la conformation de ladite face interne par déplacement du verre sous l'effet de la gravité, pendant que le récipient semi-fini se trouve dans ledit état transitoire.

D'autres objets et avantages de l'invention apparaîtront mieux à la lecture de la description qui suit, ainsi qu'à l'aide des figures annexées, fournies à titre purement explicatif et non limitatif, parmi lesquelles :
- La figure 1 illustre, de manière schématique et en coupe verticale, une première variante de récipient en verre obtenu à l'issue du procédé de l'invention ;
- La figure 2 illustre, de manière schématique et en coupe verticale, une première variante de réalisation d'un récipient semi-fini en verre (avant opération de façonnage de sa face interne) à partir duquel peut être obtenu le récipient de la figure 1 selon le procédé de l'invention ;
- La figure 3 illustre, de manière schématique et en coupe verticale, un mode de réalisation préférentiel du procédé de l'invention, permettant d'obtenir le récipient en verre de la figure 1 à partir du récipient semi-fini de la figure 2 par maintien de ce dernier, pendant un temps prédéterminé, dans une position inclinée à 90° par rapport à sa position verticale debout ;
- La figure 4 illustre, de manière schématique et en coupe verticale, une deuxième variante de récipient en verre obtenu à l'issue du procédé de l'invention ;
- La figure 5 illustre, de manière schématique et en coupe verticale, une deuxième variante de réalisation d'un récipient semi-fini en verre (avant opération de façonnage de sa face interne) à partir duquel peut être obtenu le récipient de la figure 4 selon le procédé de l'invention ;
- La figure 6 illustre, de manière schématique et en coupe verticale, un autre mode de réalisation préférentiel du procédé de l'invention, permettant d'obtenir le récipient en verre de la figure 4 à partir du récipient semi-fini de la figure 5 par maintien de ce dernier, pendant un temps prédéterminé, dans une position inclinée à 180° par rapport à sa position verticale debout.

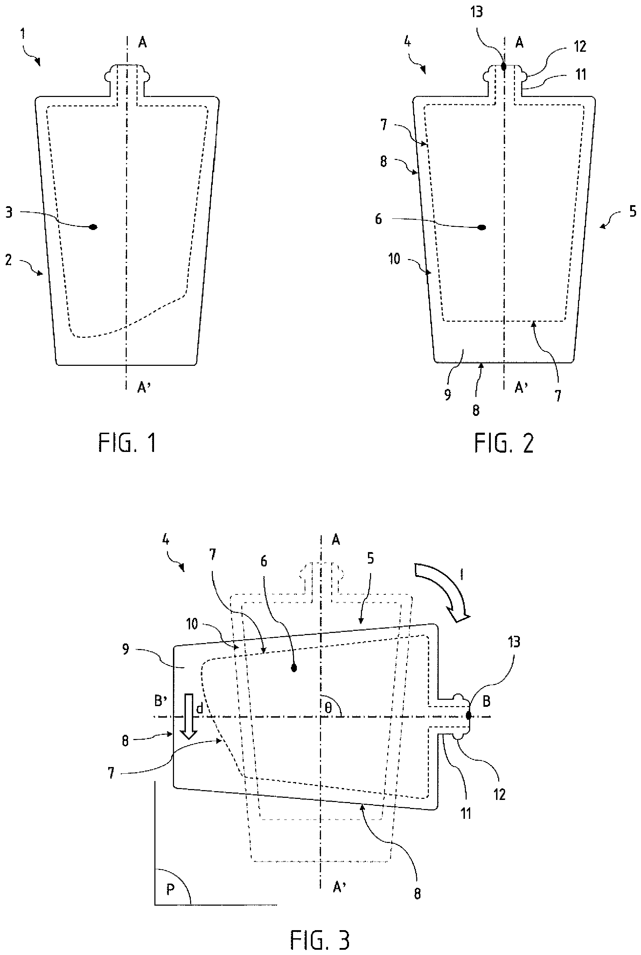

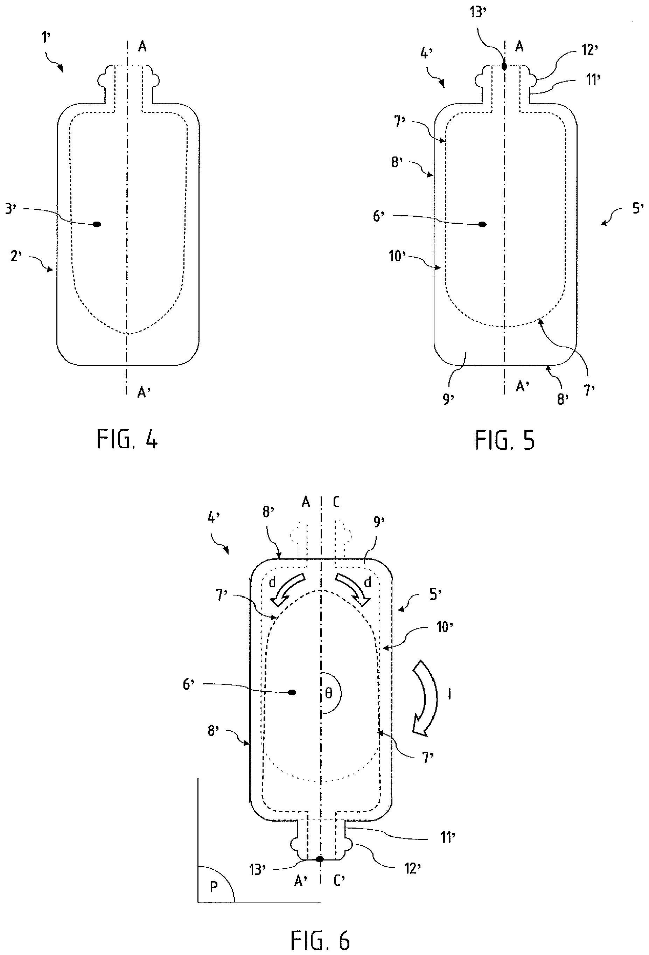

Selon un premier aspect, l'invention concerne un procédé de fabrication d'un récipient 1, 1' en verre, c'est-à-dire d'un article en verre creux, dont les figures 1 et 4 illustrent schématiquement deux exemples de réalisation.

De préférence, le procédé de l'invention est un procédé industriel automatisé, avantageusement mis en œuvre à l'aide de moyens de production automatiques, de type machine IS (« *Individual Section* »), de sorte à assurer une cadence de production industrielle. Ainsi, le procédé de l'invention ne s'intéresse préférentiellement pas à un contexte de fabrication manuelle ou semi-automatique dudit récipient en verre 1, 1', bien qu'il puisse tout à fait être mise en œuvre dans un tel contexte.

Tel qu'illustré, ledit récipient 1, 1' en verre comprend, de préférence, une enveloppe 2, 2' en verre qui délimite une cavité 3, 3' d'accueil pour une substance « *fluide* », c'est-à-dire une substance susceptible de s'écouler, comme par exemple une substance liquide, pâteuse (tel qu'un liquide avec un degré de viscosité élevé) ou pulvérulente. De préférence, le récipient 1, 1' obtenu à l'aide du procédé de l'invention forme un récipient conçu pour contenir une substance « *fluide* » à usage cosmétique (parfum, crème, talc ou autres) ou alimentaire (huile, vinaigre, eau, jus, vin ou spiritueux, etc.). Bien évidemment, ledit récipient 1, 1' pourra être destiné à un usage différent, par exemple pour contenir une substance pharmaceutique, de l'encre pour l'écriture et le dessin, ou pourra encore former un vase (par exemple de type soliflore).

Selon l'invention, le procédé de fabrication dudit récipient 1, 1' en verre, à partir d'une masse de verre fondu, comprend une étape de formage, c'est-à-dire avantageusement une étape de mise en forme mécanique à chaud, de ladite masse de verre fondu pour obtenir un récipient semi-fini 4, 4'.

Dans le contexte de l'invention, l'expression « *récipient semi-fini* » est préférentiellement utilisée pour désigner un article en verre creux intermédiaire préfigurant ledit récipient 1, 1', lequel peut alors être qualifié de « *fini* ». Tel qu'illustré aux figures 2 et 5, ledit récipient semi-fini 4, 4' comprend ainsi avantageusement, à l'instar du récipient 1, 1' qu'il a vocation à devenir à l'issue du procédé de l'invention, une enveloppe 5, 5' en verre, qui délimite une cavité intérieure 6, 6' et présente une face interne 7, 7' disposée en regard de ladite cavité intérieure 6, 6' et une face externe 8, 8' opposée.

En particulier, si ledit récipient semi-fini 4, 4' présente préférentiellement une face externe 8, 8' dont la conformation est sensiblement identique à la conformation qu'affectera la face externe correspondante du récipient 1, 1' fini, ledit récipient semi-fini 4, 4' diffère avantageusement dudit récipient 1, 1' fini en ce que la conformation de sa face interne 7, 7' n'est quant à elle pas définitive, à l'issue de ladite étape de formage, mais au contraire temporaire, comme on le comprendra à la lecture de ce qui suit.

On notera que, dans le contexte de l'invention, le terme « *verre* » est préférentiellement employé dans son sens classique, c'est-à-dire pour désigner un verre minéral, de préférence obtenu à partir de silice. A ce titre, ledit verre est, par exemple, un verre silicaté blanc, transparent, tel qu'un verre sodocalcique, un verre borosilicate ou encore un verre « *cristal* » (verre à base de silice et d'oxyde de plomb). Dans cette hypothèse, la masse de verre fondu en question pourra être obtenue par tout moyen connu de l'industrie verrière. Néanmoins, ledit verre pourra alternativement être un verre dit « *organique* », obtenu à partir d'une résine de synthèse, tel que par exemple un polystyrène (PS) non expansé, un poly(méthacrylate de méthyle) (PMMA), ou encore un polycarbonate (PC).

L'enveloppe 5, 5' du récipient semi-fini 4, 4' est avantageusement formée par un fond 9, 9' en verre et une paroi latérale 10, 10' en verre, laquelle paroi latérale 10, 10' s'élève à partir et à la périphérie dudit fond 9, 9', de préférence jusqu'à un col 11, 11' et une bague 12, 12' qui ferment ledit récipient semi-fini 4, 4' tout en ménageant une ouverture 13, 13', plus ou moins large, permettant de mettre en communication la cavité intérieure 6, 6' avec l'extérieur. On comprend donc que la face interne 7, 7' de l'enveloppe 5, 5' du récipient semi-fini 4, 4' correspond de préférence essentiellement aux faces internes respectives dudit fond 9, 9' et de ladite paroi latérale 10, 10' qui sont disposées en regard de ladite cavité 6, 6' intérieure, tandis que la face externe 8, 8' de l'enveloppe 5, 5' correspond de préférence essentiellement, réciproquement, aux faces externes respectives dudit fond 9, 9' et de ladite paroi latérale 10, 10'.

La forme générale de l'enveloppe 5, 5' du récipient semi-fini 4, 4', de même que celle dudit récipient 1, 1' fini, ne sont bien évidemment pas limitées à celles illustrées aux figures, et pourront par exemple être de révolution (sphérique, ovoïde, cylindrique, tronconique, etc.) ou non (cubique, pyramidale, etc.), géométrique ou non. De préférence, ledit récipient semi-fini 4, 4' comporte un col 11, 11' et une bague 12, 12' étroits, de sorte que les dimensions de ladite ouverture 13, 13' sont significativement plus petites que celles de ladite cavité intérieure 6, 6' à laquelle ladite ouverture 13, 13' donne accès. Ainsi, ledit récipient semi-fini 4, 4' préfigure de préférence, mais sans caractère limitatif, un récipient 1, 1' fini de type flacon, fiole ou bouteille.

Le verre formant ladite masse de verre fondu à partir de laquelle est obtenu ledit récipient semi-fini 4, 4' est de préférence transparent et incolore, mais pourra alternativement être coloré et /ou opacifié, par exemple par des oxydes métalliques, pour conférer *in fine* au récipient 1, 1' un caractère esthétique particulier ou encore protéger la substance fluide contenue au sein dudit récipient 1, 1' des effets de la lumière, en particulier dans certaines plages de longueur d'onde. Par ailleurs, ledit verre pourra être un verre « *neuf*», c'est-à-dire un verre obtenu exclusivement à partir de matières premières nouvelles, ou alternativement un verre au moins partiellement recyclé, c'est-à-dire un verre obtenu à partir d'une part non négligeable, voire prédominante, de verre usagé (sous forme par exemple de calcin industriel et/ou de calcin ménager).

De préférence, ladite étape de formage comprend une opération de soufflage final, dans un moule finisseur, d'une ébauche en verre obtenue à partir de ladite masse de verre fondu, pour obtenir ledit récipient semi-fini 4, 4'. Cette opération de soufflage final peut être avantageusement précédée d'une opération de préformage pour obtenir ladite ébauche, dans un moule ébaucheur, par pressage (procédé « *pressé-soufflé* ») ou par soufflage (procédé « *soufflé-soufflé* ») de ladite masse de verre fondu. Alternativement, ladite étape de formage pourra ne comprendre qu'une seule opération de pressage (procédé *« pressé pur* ») de ladite masse de verre fondu dans un moule ébaucheur pour obtenir une ébauche qui formera directement, en particulier sans opération de soufflage complémentaire, ledit récipient semi-fini 4, 4'. De telles opérations de soufflage final / de pressage et de préformage sont bien connues, en tant que telles, dans le domaine de l'industrie verrière et ne seront donc pas décrites ici plus en détail.

Une fois ladite ébauche placée dans le moule finisseur, on la laissera alors s'allonger un certain temps, sous l'effet de son propre poids, avant de venir la souffler, au cours de ladite opération de soufflage final, pour former ledit récipient semi-fini 4, 4'. Ledit moule finisseur pourra optionnellement présenter, au niveau de sa paroi intérieure, une forme en négatif et / ou un aspect de surface particulier (par exemple un motif en relief), de sorte à conférer à la face externe 8, 8' du récipient semi-fini 4, 4' une conformation spécifique par transfert de ladite forme en négatif ou dudit motif.

Le procédé de l'invention comprend également une étape de refroidissement du récipient semi-fini 4, 4' obtenu à l'étape de formage. Au cours de cette étape de refroidissement, ledit récipient semi-fini 4, 4' est amené dans un état transitoire dans lequel le verre formant la face externe 8, 8' du récipient semi-fini 4, 4' est suffisamment visqueux, pâteux, pour que ladite face externe 8, 8' ne se déforme sensiblement pas sous l'effet de la gravité, tandis que le verre formant la face interne 7, 7' dudit récipient semi-fini 4, 4' est quant à lui encore suffisamment fluide, c'est-à-dire d'une viscosité encore suffisamment faible, pour pouvoir au contraire autoriser la déformation de ladite face interne 7, 7' sous l'effet de la gravité, c'est-à-dire sous l'effet de son propre poids.

Ce caractère déformable ou non desdites faces interne 7, 7' et externe 8, 8' sous l'effet de la gravité (ladite gravité étant considérée ici en tant que composante principale de la force de pesanteur) est de préférence déterminé, dans le contexte de l'invention, à l'œil nu et sur une échelle de temps en rapport direct avec la durée totale de production du récipient 1, 1' (de l'ordre par exemple de la dizaine de secondes), avantageusement considérée depuis le démarrage de ladite étape de formage jusqu'à l'obtention du récipient 1, 1' à l'issue de ladite étape de refroidissement. On notera en outre que ledit caractère déformable est, au sens de l'invention, avantageusement apprécié strictement indépendamment de toute déformation éventuelle qui serait purement due à des effets de dilatation ou de rétractation du verre considéré au cours dudit procédé.

Ainsi, l'atteinte dudit état transitoire pourra être aisément caractérisée, par exemple, par une observation visuelle du comportement du récipient semi-fini sur un temps suffisant, en constatant en particulier l'existence d'un écoulement en direction du sol de la masse de verre formant la face interne 7, 7' du récipient semi-fini 4, 4' alors que le récipient semi-fini 4, 4' est maintenu immobile (à la verticale ou incliné) et, au contraire, une absence d'écoulement significatif en direction du sol de la masse de verre formant la face externe 8, 8' dudit récipient semi-fini 4, 4' sur la période temporelle considérée. De préférence, dans ledit état transitoire, la viscosité du verre formant la face externe 8, 8' du récipient semi-fini 4, 4' est strictement supérieure à 10^{7,6} dPa·s, tandis que la viscosité du verre formant sa face interne 7, 7' est inférieure ou égale à 10^{7,6} dPa·s. En effet, cette valeur particulière de viscosité (point de Littleton ou « *softening point* »), qui peut varier selon la nature du verre considéré, est généralement considérée en pratique comme marquant le passage du verre d'un état malléable à un état sensiblement figé. Dans le cas, évoqué ci-avant, où le verre ne serait pas un verre minéral, tel qu'un verre de silice, mais un verre dit « *organique* », la viscosité dudit verre dans l'état transitoire pourra bien évidemment différer de celle indiquée ci-dessus, selon la nature exacte du verre organique considéré.

La viscosité du verre pouvant se révéler complexe à mesurer dans le contexte d'un procédé de fabrication industriel en ligne, on pourra avantageusement se référer, pour caractériser ledit état transitoire, à une mesure des températures Te et Ti respectives desdites faces externe 8, 8' et interne 7, 7' du récipient semi-fini 4, 4'. Ainsi, dans ledit état transitoire, la température Te de ladite face externe 8, 8' sera avantageusement strictement inférieure à la température de ramollissement T_{L} (ou « *température de Littleton* ») du verre considéré, tandis la température Ti de ladite face interne 7, 7' sera avantageusement supérieure ou égale à ladite température de ramollissement T_{L}. Pour rappel, pour un verre donné, ladite température de ramollissement T_{L} peut être avantageusement déterminée à l'aide de la méthode dite de l'allongement de fibre (« *Fiber Elongation Methode* ») telle qu'elle est décrite dans les normes JIS-R 3104 et ASTM-C338.6.

De préférence, dans le cas où ladite masse de verre fondu est obtenue à partir d'un verre sodocalcique classique, incolore et transparent, la température Te de ladite face externe 8, 8' pourra, dans ledit état transitoire, être typiquement comprise entre 550 et 650°C, tandis que la température Ti de ladite face interne 7, 7' pourra quant à elle être typiquement comprise entre 750 et 1 200°C. Bien entendu, ces plages de températures ne sont données qu'à titre d'exemple, étant donné qu'elles sont susceptibles de varier selon la nature du verre employé.

Ladite étape de refroidissement débute avantageusement au cours même de ladite opération de formage. En effet, au contact du moule finisseur évoqué ci-avant, le verre formant la face externe 8, 8' du récipient semi-fini 4, 4' pourra se refroidir plus rapidement que le verre formant la face interne 7, 7' dudit récipient semi-fini 4, 4', dans la mesure où la paroi intérieure du moule finisseur se trouve généralement à une température inférieure à la température de la face externe 8, 8' du récipient semi-fini 4, 4'. Ceci conduit à l'établissement d'un gradient de viscosité (et de température) à travers l'épaisseur de l'enveloppe 5, 5' du récipient semi-fini 4, 4'. Il a d'ailleurs été observé que ce gradient est d'autant plus important localement que l'épaisseur moyenne de ladite enveloppe 5, 5' au point considéré est élevée, par exemple au niveau du fond 9, 9' du récipient semi-fini 4, 4'. Un tel phénomène est peut également être observé dans le cas où le récipient semi-fini 4, 4' est obtenu par le biais d'une seule opération de pressage (procédé « *pressé pur*»), le verre formant la face externe 8, 8' du récipient semi-fini 4, 4' pouvant alors commencer à se refroidir au contact dudit moule ébaucheur.

Dans tous les cas, ledit état transitoire disparaît avantageusement à mesure que le récipient semi-fini 4, 4' se refroidit et que tend à s'annuler ledit gradient de viscosité et de température. En d'autres termes, la fin dudit état transitoire est avantageusement marquée par une viscosité du verre formant respectivement lesdites faces interne 7', 7' et externe 8, 8' qui est sensiblement supérieure à 10^{7,6} dPa.s, soit par des températures correspondantes Ti et Te sensiblement inférieure à ladite température de ramollissement T_{L} du verre considéré.

Tirant avantageusement parti de ce phénomène transitoire, le procédé de l'invention comprend, pendant que le récipient semi-fini 4, 4' se trouve dans ledit état transitoire, une opération de façonnage, c'est-à-dire avantageusement de « *remodelage* », de ladite face interne 7, 7' encore molle. Cette opération de façonnage n'affecte avantageusement pas, en tant que telle, la conformation propre de ladite face externe 8, 8' opposée, dont le verre est suffisant dur et figé compte tenu de ce qui précède.

De manière astucieuse, une telle modification de ladite face interne 7, 7' est obtenue, selon l'invention, en maintenant le récipient semi-fini 4, 4' au cours de ladite opération de façonnage, et pendant un temps prédéterminé t, dans une position inclinée / (de préférence prédéfinie) par rapport à sa position verticale debout pour entraîner une modification de la conformation de ladite face interne 7, 7' par déplacement d, ou fluage, du verre formant ladite face interne 7, 7' sous l'effet de la gravité.

Au sens de l'invention, ladite « *position verticale* debout » correspond avantageusement à la position naturelle, usuelle, qu'affecterait ledit récipient semi-fini 4, 4' (ainsi avantageusement que le récipient 1, 1' fini correspondant) s'il venait à reposer de manière stable, par l'intermédiaire de son fond 9, 9', sur un support horizontal plan. En reprenant les exemples illustrés aux figures, ladite « *position verticale debout* » correspond de préférence à une position dans laquelle récipient semi-fini 4, 4' (et avantageusement du récipient 1, 1' fini correspondant) s'étend selon un premier axe A-A' moyen d'extension verticale qui est sensiblement parallèle à la direction de la pesanteur (telle que par exemple donnée par un fil à plomb). Dans cette « position *verticale debout* », le col 11, 11' et la bague 12, 12' sont ainsi préférentiellement dirigés avec le haut, bien qu'ils puissent éventuellement être décalés d'un côté ou de l'autre dudit premier axe A-A', tandis que le fond 9, 9' est dirigé vers le bas (c'est-à-dire vers le sol).

De préférence, au cours de ladite opération de façonnage, la modification de la conformation de la face interne 7, 7' du récipient semi-fini 4, 4' par déplacement d du verre se fait sous le seul effet de la gravité, c'est-à-dire sous le seul effet du poids propre du verre formant ladite face interne 7, 7'. Le procédé de l'invention est ainsi particulièrement simple et ne nécessite la mise en œuvre d'aucun moyen technique complémentaire complexe. Alternativement, on pourra cependant envisager que ce déplacement d du verre puisse être contrôlé (c'est-à-dire facilité, accéléré ou au contraire limité, freiné), notamment par application d'une force additionnelle de même sens ou de sens contraire, par exemple par mise sous vide ou centrifugation dudit récipient semi-fini 4, 4'.

Selon une première variante préférentielle, illustrée à la figure 3, ladite position inclinée pourra correspondre à une inclinaison I du récipient semi-fini 4 d'un angle θ de 90° par rapport à ladite position verticale debout. Ainsi, le récipient semi-fini 4 sera avantageusement maintenu dans une position dans laquelle il s'étendra longitudinalement selon un deuxième axe moyen B-B' formant un angle de 90° avec ledit premier axe moyen A-A' d'extension verticale (figure 3). Autrement dit, ledit récipient semi-fini 4 sera maintenu en position sensiblement « *couchée* » par rapport à sa position verticale debout.

De la sorte, il est par exemple possible, tel que cela est illustré à la figure 3, de façonner ladite face interne 7, 7' pour obtenir en particulier un récipient semi-fini 4 dont la partie de l'enveloppe 5 formant le fond présente une épaisseur non uniforme et globalement croissante selon une direction avantageusement normale à l'axe moyen d'extension verticale A-A' (figure 1). On pourra ainsi volontairement obtenir, à l'issue de l'étape de refroidissement, un récipient 1 fini pourvu d'un fond « décalé » ou « *déplacé* », asymétrique par rapport à l'axe moyen d'extension verticale A-A', conférant audit un récipient 1 une esthétique particulière.

Selon une deuxième variante préférentielle, illustrée quant à elle à la figure 6, ladite position inclinée pourra correspondre à une inclinaison I du récipient semi-fini 4' d'un angle θ de 180° par rapport à ladite position verticale debout. Ainsi, le récipient semi-fini 4' sera avantageusement maintenu dans une position dans laquelle il s'étendra verticalement selon un troisième axe moyen C-C' formant un angle de 180° avec ledit premier axe moyen A-A' d'extension verticale (figure 3), lesdits premier A-A' et troisième C-C' axes moyens étant ainsi parallèles sinon colinéaires et confondus. Autrement dit, ledit récipient semi-fini 4' sera alors avantageusement maintenu en position complétement « *retournée* » par rapport à sa position verticale debout.

Cette position inclinée spécifique s'avère en effet particulièrement intéressante dès lors que l'on souhaite fabriquer, par exemple, un récipient 1' fini pourvu d'un fond intérieur fortement bombé, concave, voire hémisphérique (figure 4), sans effet d'aplanissement indésirable de la face interne au niveau du fond. En effet, au cours de ladite opération de façonnage, le déplacement d sous l'effet de la gravité du verre formant la face interne 7' du récipient semi-fini 4, 4' va tendre à accentuer le rayon de courbure de ladite face interne 7' au niveau du fond 9', le verre « *s'écoulant* » avantageusement selon la paroi latérale 10' en direction du col 11' et de l'ouverture 13', tel que cela est représenté de manière schématique à la figure 6.

Si, tel qu'illustré aux figures 1 et 4, l'influence d'un tel maintien en position inclinée, conformément au procédé de l'invention, est particulièrement notable sur un récipient semi-fini 4, 4' à fond épais (c'est-à-dire d'une épaisseur moyenne d'enveloppe 5, 5' au niveau du fond 9, 9' avantageusement supérieure ou égale à 5 mm), on notera qu'il est ainsi par ailleurs possible de modifier la conformation de la face interne 7, 7' au niveau de la paroi latérale 10, 10' et d'introduire volontairement une variation particulière et plus ou moins prononcée de l'épaisseur moyenne de cette dernière.

Bien évidemment, ces deux variantes de position inclinée ne sont données ici qu'à titre d'exemples et on pourra plus généralement envisager une inclinaison d'un angle θ tel que 0° > θ ≥ 180°, par exemple un angle θ égal à 45°.

Par souci de simplicité, ladite position inclinée a été exprimée dans ce qui précède sous la forme d'une inclinaison I d'angle θ positif (dans le sens horaire), dans un plan P contenant l'axe marquant la position verticale debout dudit récipient semi-fini 4, 4', en l'espèce ledit premier axe A-A' (figures 4 et 6). On comprendra néanmoins que ladite position inclinée pourra, sans sortir pour autant du cadre de l'invention, correspondre à un angle θ négatif (-180°≤ θ < 0°) dans ledit plan P, l'inclinaison I pouvant en effet évidemment être maintenue de part ou d'autre de l'axe marquant ladite position verticale debout dudit récipient semi-fini 4, 4'. Ladite position inclinée pourra en outre correspondre à une inclinaison I d'angle θ, positif ou négatif, dans un plan P' (non illustré) orthogonal audit plan P représenté aux figures, voire même correspondre à une combinaison d'une inclinaison I_{P} d'angle d'θ_{P} dans ledit plan P et d'une inclinaison I_{P'} d'angle d'θ_{P'} dans un plan P' (non illustré) orthogonal au plan P.

Il existe par conséquent une infinité de positions inclinées envisageables selon, d'une part, la forme générale propre de l'enveloppe 5, 5' du récipient semi-fini 4, 4' obtenu à l'étape de formage et, d'autre part, selon la conformation particulière que l'on souhaite impartir à la face interne 7, 7' du récipient semi-fini 4, 4'.

De préférence, ladite position inclinée, avantageusement prédéfinie, est une position statique dudit récipient semi-fini 4, 4', c'est-à-dire que ladite position inclinée correspond à une inclinaison I maintenue constante durant tout ledit temps prédéterminé t, selon un angle θ donné, dudit récipient semi-fini 4, 4' par rapport à ladite position verticale debout. Alternativement, ladite position inclinée pourra ne pas correspondre à une inclinaison I unique et constante. En effet, elle pourra au contraire être « *dynamique* » et correspondre à une séquence prédéfinie d'une pluralité d'inclinaisons I*ₙ* distinctes, d'angles θ*ₙ* donnés, respectivement maintenues durant un temps prédéterminé *tₙ* (tel que la somme desdits temps prédéterminés *tₙ* est égale audit temps prédéterminé *t*). Il pourra ainsi être possible de contrôler de manière particulièrement fine le déplacement d du verre formant la face interne 7, 7' du récipient semi-fini 4, 4' et d'obtenir, par répartition inhomogène contrôlée du verre, des conformations particulièrement originales et esthétiques de ladite face interne 7, 7'. En effet, il a été observé un phénomène « *non-linéaire* » du déplacement d du verre sous l'effet de la gravité, ledit verre commençant par se déplacer très lentement, de manière presque imperceptible à l'œil nu, avant de se déplacer à une vitesse plus élevée et croissante, puis de ralentir.

S'il est envisageable que ladite opération de façonnage de la face interne 7, 7' du récipient semi-fini 4, 4' se déroule alors que ce dernier est encore en position dans le moule finisseur, ledit procédé de l'invention comprend de préférence, préalablement à ladite opération de façonnage, une étape d'extraction du récipient semi-fini 4, 4' hors du moule finisseur. En d'autres termes, l'opération de façonnage de la face interne 7, 7' du récipient semi-fini 4, 4' est préférentiellement réalisée à l'issue de ladite étape de formage et une fois le récipient semi-fini 4, 4' extrait dudit moule finisseur. On notera que dans le cas susmentionné où le récipient semi-fini 4, 4' est obtenu en « *pressé pur* », c'est-à-dire par le seul pressage de ladite masse de verre fondue dans un moule ébaucheur au cours de ladite étape de formage, ladite étape d'extraction pourra correspondre à une extraction du récipient semi-fini 4, 4' hors dudit moule ébaucheur.

A l'issue de l'étape de formage, et de préférence lors de ladite étape d'extraction du récipient semi-fini 4, 4' hors du moule finisseur, un moyen de préhension (ou préhenseur), par exemple de type pince ou cage, vient avantageusement saisir le récipient semi-fini 4, 4' par sa face externe 8, 8', de préférence encore par son col 11, 1 1' et sa paroi latérale 10, 10'.

De préférence, ledit récipient semi-fini 4, 4' sera placé, au cours de ladite étape de refroidissement, dans un flux d'air de ventilation de sorte à contribuer, sinon à accélérer, son refroidissement. Pour ce faire, ledit moyen de préhension pourra venir placer ledit récipient semi-fini 4, 4' au-dessus et en regard d'une plaque de repos horizontale, laquelle est percée d'orifices à travers lesquels est diffusé un flux d'air (avantageusement sensiblement dépourvu de poussières et sec) de ventilation vertical ascendant, destiné à contribuer au refroidissement dudit récipient semi-fini 4, 4'. Ce flux d'air est de préférence à température ambiante, la vitesse de refroidissement du récipient semi-fini 4, 4' étant alors avantageusement contrôlée par un réglage fin du débit dudit flux d'air. En particulier, on apportera une attention toute particulière à éviter la mise en œuvre d'un débit d'air trop important, qui serait de nature à déplacer le récipient semi-fini 4, 4' de ladite position inclinée, voire à contrer tout effet de la gravité sur le verre formant la face interne 7, 7' dudit récipient semi-fini 4, 4'.

De préférence, l'opération de façonnage en elle-même débute alors lorsque, le récipient semi-fini 4, 4' se trouvant dans ledit état transitoire, un moyen de support vient maintenir, de préférence de manière ferme et stable, ledit récipient semi-fini 4, 4' dans ladite position inclinée prédéfinie. Avantageusement, ce moyen de support pourra être confondu avec ledit moyen de préhension et le récipient semi-fini 4, 4' est alors maintenu par ce dernier dans ladite position inclinée, par l'intermédiaire sa face externe 8, 8', et de préférence de son col 11, 11' et de sa paroi latérale 10, 10'.

Au cours de campagnes d'essais itératifs menés par la Demanderesse, il a été observé qu'il est particulièrement intéressant que ladite étape de façonnage de la face interne 7, 7' soit initiée alors que l'état transitoire dans lequel se trouve récipient semi-fini 4, 4' correspond à la présence un gradient important de viscosité (et donc de température), typiquement de l'ordre de 300°C (voire plus), entre lesdites faces interne 7, 7' et externe 8, 8'. En effet, l'existence d'un gradient de viscosité / de température important entre lesdites faces interne 7, 7' et externe 8, 8' est de nature à faciliter le déplacement d du verre formant ladite face interne 7, 7' sous l'effet de la gravité, c'est-à-dire sous l'effet de son propre poids, en particulier en l'absence de force additionnelle qui serait appliquée pour compléter ledit effet de la gravité. Bien évidemment l'ordre de grandeur de ce gradient de température pourra être ajusté, d'une part, selon la nature du verre employé et, d'autre part, selon l'épaisseur moyenne de la paroi latérale 10, 10' et / ou du fond 9, 9' formant l'enveloppe 5, 5' du récipient semi-fini 4, 4'.

A titre d'exemple, ledit récipient semi-fini 4, 4' pourra ainsi être extrait dudit moule finisseur (ou dudit moule ébaucheur, le cas échéant), alors qu'il se trouve dans ledit état transitoire, et que la température Te de sa face externe 8, 8' est avantageusement sensiblement égale à 600 °C, tandis que la température Ti de sa face interne 7, 7' est avantageusement sensiblement égale à 900 °C.

Dans la mesure où, à l'issue de ladite étape de formage ou de ladite étape d'extraction, ledit récipient semi-fini 4, 4' ne se trouve pas déjà dans ladite position inclinée prédéfinie mais, par exemple, dans une position correspondant sensiblement à sa position verticale debout, telle que cette dernière est définie ci-avant, le procédé de l'invention pourra avantageusement mettre en œuvre un moyen d'inclinaison conçu pour faire subir audit récipient semi-fini 4, 4' un changement d'orientation de sorte à l'amener dans ladite position inclinée. Ainsi, une fois que ledit moyen de préhension a préférentiellement saisi le récipient semi-fini 4, 4' par sa face externe 8, 8', ledit moyen d'inclinaison fait avantageusement subir audit récipient semi-fini 4, 4' un changement d'orientation, c'est-à-dire une inclinaison I d'angle θ telle qu'introduite ci-avant, de sorte à amener le récipient semi-fini 4, 4' dans ladite position inclinée, avant que ledit moyen de support maintienne le récipient semi-fini 4, 4' dans ladite position inclinée pendant ledit temps prédéterminé *t.*

Avantageusement, tel qu'on le verra plus loin, ce moyen d'inclinaison pourra être intégré audit moyen de préhension et / ou audit moyen de support.

La détermination du temps prédéterminé t pendant lequel ledit récipient semi-fini 4, 4' est maintenu dans ladite position inclinée par rapport à ladite position verticale debout peut dépendre de la nature du verre employé, des dimensions du récipient semi-fini 4, 4', de la viscosité du verre formant ladite face interne 7, 7' au début de ladite étape de façonnage, et donc de sa propension à se déplacer plus ou moins rapidement sous l'effet de la gravité, de la vitesse moyenne de refroidissement dudit récipient semi-fini 4, 4' sous l'effet notamment dudit flux d'air de ventilation, ou encore de la conformation que l'on souhaite effectivement impartir à ladite face interne 7, 7' (par exemple un « *décalé* » plus ou moins prononcé du fond 9, ou encore un rayon de courbure plus ou moins élevé du fond 9' du récipient semi-fini 4, 4'). Ledit temps prédéterminé t pourra en outre correspondre strictement au temps nécessaire audit récipient semi-fini 4, 4' pour quitter ledit état transitoire (voire même excéder ce temps nécessaire), c'est-à-dire au temps nécessaire pour que le verre formant la face interne 7, 7' dudit récipient semi-fini 4, 4' soit suffisamment visqueux pour que ladite face externe 8, 8' ne se déforme sensiblement plus, en tout cas de manière observable à l'œil nu, sous l'effet de la gravité. Néanmoins, pour des raisons notamment de productivité, ledit temps prédéterminé t pourra être optimisé et être avantageusement choisi inférieur à ce temps nécessaire audit récipient semi-fini 4, 4' pour quitter ledit état transitoire. De manière préférentielle, lorsque le procédé de l'invention est mis en œuvre de manière automatique à l'aide d'une machine IS, ledit temps prédéterminé *t* pourra correspondre à une plage de l'ordre 200° d'un cycle à 360° de ladite machine IS, et être par exemple sensiblement égal à 5 s.

Une fois le temps prédéterminé *t* écoulé, le récipient semi-fini 4, 4' est de préférence ramené de ladite position inclinée, dans laquelle il était maintenu, à ladite position verticale debout, avantageusement par un nouveau changement d'orientation opéré par ledit moyen d'inclinaison. Puis, ledit moyen de préhension vient ensuite avantageusement déposer le récipient semi-fini 4, 4' dans ladite position verticale debout sur ladite plaque de repos, avant qu'il soit évacué, par exemple à l'aide d'un tapis convoyeur.

Enfin, le procédé de l'invention pourra avantageusement comprendre à l'issue de ladite opération de façonnage, une étape de recuisson (par exemple en arche), au cours de laquelle ledit récipient semi-fini 4, 4' sera avantageusement recuit, de sorte à en éliminer les éventuelles tensions résiduelles (en particulier dans les zones de forte épaisseur de verre).

L'invention concerne également, en tant que telle, une installation (non illustrée) de fabrication d'un récipient 1, 1' en verre à partir d'une masse de verre fondu, avantageusement destinée à mettre en oeuvre le procédé de l'invention décrit ci-avant. De préférence, ladite installation est une installation industrielle automatisée, qui met avantageusement en œuvre des moyens de production mécanisés et automatiques.

Selon l'invention, l'installation comprend un poste de formage (préférentiellement automatique de type machine IS et non manuel ou seulement semi-automatique) de ladite masse de verre fondu pour obtenir un récipient semi-fini 4, 4', ladite masse de verre fondu et ledit récipient semi-fini 4, 4' étant avantageusement conforme à la description qui en a été faite en détails ci-dessus.

De préférence, ledit poste de formage comprend un système de soufflage final et un moule finisseur, conçus pour permettre l'obtention dudit récipient semi-fini 4, 4' par soufflage, dans ledit moule finisseur, d'une ébauche en verre elle-même obtenue à partir de ladite masse de verre fondu. De préférence encore, ledit poste de formage comprend également, en amont dudit système de soufflage final, un système de préformage incluant un moule ébaucheur, lequel système de préformage est conçu pour permettre l'obtention de ladite ébauche par pressage (procédé « *pressé-soufflé* ») ou par soufflage (procédé « *soufflé-soufflé* »), dans ledit moule ébaucheur, de ladite masse de verre fondu. Alternativement, ledit poste de formage pourra ne comprendre qu'un seul système de pressage (procédé « *pressé pur* ») de ladite masse de verre fondu, conçu pour permettre l'obtention d'une ébauche qui formera directement, en particulier sans opération de soufflage complémentaire, ledit récipient semi-fini 4, 4'. De tels systèmes de soufflage final / de pressage, système de préformage, et moules associés sont bien connus, en tant que tels, dans le domaine de l'industrie verrière et ne seront donc pas décrits ici plus en détail.

Selon l'invention, ladite installation comprend en outre des moyens de refroidissement du récipient semi-fini 4, 4'. Ces moyens de refroidissement comprennent avantageusement, outre éventuellement l'air ambiant autorisant un refroidissement naturel dudit récipient semi-fini 4, 4', une plaque de repos horizontale percée d'orifices traversants ainsi qu'un système de génération de flux d'air prévu pour permettre la diffusion, à travers lesdits orifices de la plaque de repos, d'un flux d'air de ventilation vertical ascendant. Lesdits moyens de refroidissement peuvent en outre avantageusement comprendre d'autres éléments et dispositifs éventuellement confondus avec ledit poste de formage.

En particulier, lesdits moyens de refroidissement incluent avantageusement ledit moule finisseur, dans la mesure où celui-ci, dépourvu de moyens spécifiques de chauffage / de maintien en température contribue, comme évoqué ci-avant, au refroidissement du récipient semi-fini 4, 4' par simple contact entre la paroi intérieure du moule finisseur et la face externe 8, 8' du récipient semi-fini 4, 4'.

Selon l'invention, lesdits moyens de refroidissement sont plus spécifiquement conçus pour permettre d'amener (voire de maintenir) ledit récipient semi-fini 4, 4' dans un état transitoire avantageusement conforme à la description qui en, a été faite ci-avant en lien avec le procédé de l'invention. Pour ce faire, ladite installation pourra notamment comprendre, de manière avantageuse, un dispositif de pilotage et de régulation desdits moyens de refroidissement. Ce dernier pourra inclure, par exemple et de manière non limitative, des capteurs (par exemple optique) et moyens de régulation de la température de la paroi intérieure du moule finisseur et / ou des températures Te et Ti desdites faces externe 8, 8' et interne 7, 7' du récipient semi-fini 4, 4', ainsi que des outils de mesure (de type débimètre ou autre) et de régulation (vanne, etc.) du débit du flux d'air de ventilation.

Ladite installation comprend en outre, selon l'invention, des moyens de façonnage (c'est-à-dire avantageusement de « *remodelage* ») de la face interne 7, 7' dudit récipient semi-fini 4, 4', conçus pour maintenir, pendant un temps prédéterminé t, ledit récipient semi-fini 4, 4' dans une position inclinée par rapport à sa position verticale debout pour entraîner une modification de la conformation de ladite face interne 7, 7' par déplacement d du verre sous l'effet de la gravité, pendant que le récipient semi-fini 4, 4' se trouve dans ledit état transitoire. Ledit temps prédéterminé t, ladite position inclinée, ainsi que ladite position verticale debout sont avantageusement conformes à la description qui en a été faite ci-avant en lien avec le procédé de l'invention.

De manière préférentielle, lesdits moyens de façonnage comprennent un moyen de préhension (ou préhenseur) dudit récipient semi-fini 4, 4' par l'intermédiaire de la face externe 8, 8' de ce dernier. Tel qu'évoqué précédemment en lien avec le procédé de l'invention, ce moyen de préhension peut se présenter sous la forme d'un système de pince (par exemple à deux, trois ou quatre doigts) ou de « *cage* » formée de demi-cages conçu, de préférence, pour pourvoir saisir le récipient semi-fini 4, 4' par sa face externe 8, 8', de préférence encore par son col 11, 11' et sa paroi latérale 10, 10'.

De préférence, ladite installation comprend un moyen d'extraction (ou « *démouleur* ») du récipient semi-fini 4, 4' hors du moule finisseur, après ouverture de ce dernier, lequel moyen d'extraction peut alors être avantageusement confondu avec ledit moyen de préhension. Par exemple monté sur un bras de transfert, ledit moyen de préhension est en outre préférentiellement prévu pour venir positionner le récipient semi-fini 4, 4', une fois ce dernier extrait du moule finisseur, au-dessus et regard de la plaque de repos horizontale dudit système de refroidissement.

Lesdits moyens de façonnage comprennent, de préférence, un moyen de support conçu pour maintenir, de préférence de manière ferme et stable, le récipient semi-fini 4, 4' dans ladite position inclinée. Ce moyen de support peut, par exemple, se présenter sous la forme d'une potence de suspension ou d'un plateau monté sur un bâti de manière inclinée par rapport à l'horizontale et sur lequel viendrait reposer ledit récipient semi-fini 4, 4'. Néanmoins, ledit moyen de support est préférentiellement confondu avec ledit moyen de préhension, lequel est donc ainsi avantageusement prévu à la fois pour saisir le récipient semi-fini 4, 4' obtenu au poste de formage, puis pour en assurer le maintien, pendant un temps prédéterminé t, selon une orientation spatiale particulière correspondant à ladite position inclinée prédéfinie.

Dans la mesure où, au niveau du poste de formage et en particulier au sein du moule finisseur, ledit récipient semi-fini 4, 4' ne se trouve pas déjà dans ladite position inclinée prédéfinie, les moyens de façonnage de l'installation de l'invention pourront avantageusement comprendre un moyen ou système d'inclinaison conçu pour faire subir audit récipient semi-fini 4, 4' un changement d'orientation de sorte à l'amener dans ladite position inclinée. Ainsi, une fois que ledit moyen de préhension a préférentiellement saisi le récipient semi-fini 4, 4' par sa face externe 8, 8', ce moyen d'inclinaison peut avantageusement faire subir audit récipient semi-fini 4, 4' un changement d'orientation dans l'espace, c'est-à-dire lui imprimer une inclinaison I d'angle θ telle qu'introduite ci-avant, de sorte à amener le récipient semi-fini 4, 4' dans ladite position inclinée, avant que ledit moyen de support maintienne le récipient semi-fini 4, 4' dans ladite position inclinée pendant ledit temps prédéterminé t.

Avantageusement, ledit moyen d'inclinaison sera par ailleurs prévu pour faire subir audit récipient semi-fini 4, 4', une fois le temps prédéterminé t écoulé, un nouveau changement d'orientation de sorte à amener le récipient semi-fini 4, 4' de ladite position inclinée à sa position verticale debout.

Ledit moyen d'inclinaison peut avantageusement être inclus dans ledit moyen de préhension, sous la forme par exemple d'un système mécanique électrique, pneumatique ou hydraulique (moteur pas-à-pas, vérin, etc.) de mise en rotation dudit moyen de préhension, ou encore être inclus dans ledit moyen de support, sous la forme par exemple d'un système mécanique électrique, pneumatique ou hydraulique (moteur pas-à-pas, vérin, etc.), de modification de l'assiette dudit moyen de support relativement à l'horizontale. Cependant, de manière particulièrement avantageuse, lesdits moyen d'extraction, moyen de préhension, moyen d'inclinaison et moyen de support sont sensiblement confondus, regroupés, et forment un seul et même sous-ensemble mécanique, avantageusement robotisé, et se présentent sous la forme d'un bras mobile pourvu en son extrémité libre d'un système de pince rotative mono- ou multiaxiale. La conception desdits moyens de façonnage s'en trouve ainsi sensiblement simplifiée, et ces derniers s'avèrent particulièrement efficaces et relativement peu encombrants.

Avantageusement, l'installation de l'invention pourra également comprendre un dispositif de contrôle-commande automatisé desdits moyens de façonnage, avantageusement asservi au dispositif, prévu ci-dessus, de pilotage et de régulation desdits moyens de refroidissement, dont ladite position inclinée (et en particulier ladite inclinaison I d'angle θ) ainsi ledit temps prédéterminé *t* constitueront des paramètres d'entrée, avantageusement ajustables. Ceci permettra de garantir une grande fiabilité et une répétabilité du procédé de l'invention.

De manière encore plus préférentielle, ledit dispositif de contrôle-commande automatisé des moyens de façonnage et ledit dispositif de pilotage et de régulation desdits moyens de refroidissement seront eux-mêmes mis en lien d'asservissement avec ledit poste de formage, de sorte à ce que l'installation de l'invention constitue de manière très avantageuse une installation de fabrication totalement automatique (aux éventuelles opérations de maintenance près) de récipients 1, 1' en verre.

De préférence, ladite installation comprendra en outre une arche de recuisson, positionnée en aval desdits moyens de façonnage et conçue pour soumettre ledit récipient semi-fini 4, 4' à une étape de recuisson et de relaxation des éventuelles tensions résiduelles (en particulier dans les zones de forte épaisseur de verre).

Tel que cela ressort de ce qui précède, l'installation de l'invention est ainsi de conception particulièrement simple et peu onéreuse. Elle est en outre d'une mise en oeuvre particulièrement aisée et permet d'assurer, selon le procédé de l'invention, la fabrication de récipients 1, 1' en verre pourvu d'une répartition de verre intérieure particulièrement esthétique, et ce à une cadence particulièrement élevée, compatible avec les exigences d'une production de taille industrielle.

## Revendications

1. Procédé de fabrication d'un récipient (1, 1') en verre à partir d'une masse de verre fondu, comprenant une étape de formage de ladite masse de verre fondu pour obtenir un récipient semi-fini (4, 4') comprenant une enveloppe (5, 5') en verre qui délimite une cavité (6, 6') intérieure et présente une face interne (7, 7') disposée en regard de ladite cavité (6, 6') intérieure et une face externe (8, 8') opposée, et **caractérisé en ce qu'**il comprend une étape de refroidissement du récipient semi-fini (4, 4'), au cours de laquelle ledit récipient semi-fini (4, 4') est amené dans un état transitoire dans lequel le verre formant ladite face externe (8, 8') est suffisamment visqueux pour que ladite face externe (8, 8') ne se déforme sensiblement pas sous l'effet de la gravité, tandis que le verre formant ladite face interne (7, 7') est encore suffisamment fluide pour pouvoir au contraire autoriser la déformation de ladite face interne (7, 7') sous l'effet de la gravité, et **en ce qu'**il comprend, pendant que le récipient semi-fini (4, 4') se trouve dans ledit état transitoire, une opération de façonnage de ladite face interne (7, 7'), au cours de laquelle le récipient semi-fini (4, 4') est maintenu, pendant un temps prédéterminé, dans une position inclinée par rapport à sa position verticale debout pour entraîner une modification de la conformation de ladite face interne (7, 7') par déplacement (d) du verre sous l'effet de la gravité.

2. Procédé selon la revendication précédente, **caractérisé en ce que**, dans ledit état transitoire, la viscosité du verre formant ladite face externe (8, 8') est strictement supérieure à 10^{7,6} dPa·s, tandis que la viscosité du verre formant ladite face interne (7, 7') est inférieure ou égale à 10^{7,6}dPa·s.

3. Procédé selon l'une quelconque des revendications précédentes, **caractérisé en ce que**, dans ledit état transitoire,
- la température Te de ladite face externe (8, 8') est sensiblement comprise entre 550 et 650°C ;
- tandis que la température Ti de ladite face interne (7, 7') est sensiblement comprise entre 750 et 1 200 °C.

4. Procédé selon l'une quelconque des revendications précédentes, **caractérisé en ce que**, au cours de ladite opération de façonnage de ladite face interne (7, 7'), la modification de la conformation de ladite face interne (7, 7') par déplacement (d) du verre se fait sous le seul effet de la gravité.

5. Procédé selon l'une quelconque des revendications précédentes, **caractérisé en ce que** ladite position inclinée correspond à une inclinaison (I) du récipient semi-fini (4, 4') de 90° par rapport à ladite position verticale debout.

6. Procédé selon l'une quelconque des revendications 1 à 4, **caractérisé en ce que** ladite position inclinée correspond à une inclinaison (I) du récipient semi-fini (4, 4') de 180° par rapport à ladite position verticale debout.

7. Procédé selon l'une quelconque des revendications précédentes, **caractérisé en ce que** ladite position inclinée est une position statique dudit récipient semi-fini (4, 4').

8. Procédé selon l'une quelconque des revendications précédentes, **caractérisé en ce que** ladite étape de formage comprend une opération de soufflage final, dans un moule finisseur, d'une ébauche en verre obtenue à partir de ladite masse de verre fondu.

9. Procédé selon la revendication précédente, **caractérisé en ce que** ladite opération de soufflage final est précédée d'une opération de préformage pour obtenir ladite ébauche, dans un moule ébaucheur, par pressage ou par soufflage de ladite masse de verre fondu.

10. Procédé selon l'une quelconque des revendications 8 ou 9, **caractérisé en ce que** qu'il comprend, préalablement à ladite opération de façonnage de ladite face interne (7, 7'), une étape d'extraction du récipient semi-fini (4, 4') hors du moule finisseur.

11. Procédé selon l'une quelconque des revendications précédentes, **caractérisé en ce que**, au cours de ladite étape de refroidissement, ledit récipient semi-fini (4, 4') est placé dans un flux d'air de ventilation.

12. Procédé selon l'une quelconque des revendications précédentes, **caractérisé en ce que**, à l'issue de l'étape de formage, un moyen de préhension vient saisir le récipient semi-fini (4, 4') par ladite face externe (8, 8'), puis un moyen de support maintient ledit récipient semi-fini (4, 4') dans ladite position inclinée.

13. Procédé selon la revendication précédente, **caractérisé en ce que**, une fois que ledit moyen de préhension a saisi le récipient semi-fini (4, 4') par ladite face externe (8, 8'), un moyen d'inclinaison fait subir audit récipient semi-fini (4, 4') un changement d'orientation de sorte à l'amener dans ladite position inclinée, avant que ledit moyen de support maintienne ledit récipient semi-fini dans ladite position inclinée.

14. Procédé selon l'une quelconque des revendications précédentes, **caractérisé en ce qu'**il est totalement automatisé.

15. Installation de fabrication d'un récipient en verre à partir d'une masse de verre fondu, comprenant un poste de formage (1, 1') de ladite masse de verre fondu pour obtenir un récipient semi-fini (4, 4') comprenant une enveloppe (5, 5') en verre qui délimite une cavité (6, 6') intérieure et présente une face interne (7, 7') disposée en regard de ladite cavité (6, 6') intérieure et une face externe (8, 8') opposée, et **caractérisée en ce qu'**elle comprend des moyens de refroidissement, permettant d'amener ledit récipient semi-fini (4, 4') dans un état transitoire selon lequel le verre formant ladite face externe (8, 8') est suffisamment visqueux pour que ladite face externe (8, 8') ne se déforme sensiblement pas sous l'effet de la gravité, tandis que le verre formant ladite face interne (7, 7') est encore suffisamment fluide pour pouvoir au contraire autoriser la déformation de ladite face interne (7, 7') sous l'effet de la gravité, et **en ce qu'**elle comprend des moyens de façonnage de ladite face interne (7, 7') conçus pour maintenir, pendant un temps prédéterminé, ledit récipient semi-fini (4, 4') dans une position inclinée par rapport à sa position verticale debout pour entraîner une modification de la conformation de ladite face interne (7, 7') par déplacement (d) du verre sous l'effet de la gravité, pendant que le récipient semi-fini (4, 4') se trouve dans ledit état transitoire.

16. Installation selon la revendication précédente, **caractérisée en ce que** lesdits moyens de façonnage comprennent un moyen de préhension dudit récipient semi-fini (4, 4') par l'intermédiaire de ladite face externe (8, 8'), ainsi qu'un moyen de support pour maintenir le récipient semi-fini (4, 4') dans ladite position inclinée.

17. Installation selon la revendication précédente, **caractérisée en ce que** lesdits moyens de façonnage comprennent un moyen d'inclinaison conçu pour faire subir audit récipient semi-fini un changement d'orientation de sorte à l'amener dans ladite position inclinée.

## Patentansprüche

1. Verfahren zur Herstellung eines Glasbehälters (1, 1') aus einer geschmolzenen Glasmasse, umfassend einen Schritt des Formens der genannten geschmolzenen Glasmasse, um einen halbfertigen Behälter (4, 4') zu erhalten, umfassend eine Glashülle (5, 5'), welche einen inneren Hohlraum (6, 6') begrenzt und eine Innenfläche (7, 7'), die gegenüber dem genannten inneren Hohlraum (6, 6') angeordnet ist, und eine gegenüberliegende Außenfläche (8, 8') aufweist, und **dadurch gekennzeichnet, dass** es einen Schritt des Abkühlens des halbfertigen Behälters (4, 4') umfasst, in welchem der genannte halbfertige Behälter (4, 4') in einen Übergangszustand gebracht wird, in dem das Glas, das die genannte Außenfläche (8, 8') bildet, ausreichend viskos ist, damit sich die genannte Außenfläche (8, 8') unter der Einwirkung der Schwerkraft im Wesentlichen nicht verformt, während das Glas, das die genannte Innenfläche (7, 7') bildet, noch ausreichend flüssig ist, um im Gegensatz dazu die Verformung der genannten Innenfläche (7, 7') unter der Einwirkung der Schwerkraft gestatten zu können, und dadurch, dass es, während sich der halbfertige Behälter (4, 4') in dem genannten Übergangszustand befindet, einen Vorgang zur Bearbeitung der genannten Innenfläche (7, 7') umfasst, in dem der halbfertige Behälter (4, 4') während einer vorherbestimmten Zeit in einer geneigten Position in Bezug auf seine vertikale Ausgangsposition gehalten wird, um eine Modifikation der Form der genannten Innenfläche (7, 7') durch die Bewegung (d) des Glasbehälters unter der Einwirkung der Schwerkraft zu bewirken.

2. Verfahren nach dem vorhergehenden Anspruch, **dadurch gekennzeichnet, dass** in dem genannten Übergangszustand die Viskosität des Glases, das die genannte Außenfläche (8, 8') bildet, streng größer ist als 10^{7,6} dPa·s, während die Viskosität des Glases, das die genannte Innenfläche (7, 7') bildet, kleiner oder gleich 10^{7,6} dPa·s ist.

3. Verfahren nach einem der vorhergehenden Ansprüche, **dadurch gekennzeichnet, dass** in dem genannten Übergangszustand:
- die Temperatur Te der genannten Außenfläche (8, 8') im Wesentlichen zwischen 550 und 650 °C beträgt,
- während die Temperatur Ti der genannten Innenfläche (7, 7') im Wesentlichen zwischen 750 und 1 200 °C beträgt.

4. Verfahren nach einem der vorhergehenden Ansprüche, **dadurch gekennzeichnet, dass** während des Vorgangs zur Bearbeitung der genannten Innenfläche (7, 7') die Modifikation der Form der genannten Innenfläche (7, 7') durch die Bewegung (d) des Glases nur unter der Einwirkung der Schwerkraft erfolgt.

5. Verfahren nach einem der vorhergehenden Ansprüche, **dadurch gekennzeichnet, dass** die genannte geneigte Position einer Neigung (I) des halbfertigen Behälters (4, 4') von 90° in Bezug auf die genannte vertikale Ausgangsposition entspricht.

6. Verfahren nach einem der Ansprüche 1 bis 4, **dadurch gekennzeichnet, dass** die genannte geneigte Position einer Neigung (I) des halbfertigen Behälters (4, 4') von 180° in Bezug auf die genannte vertikale Ausgangsposition entspricht.

7. Verfahren nach einem der vorhergehenden Ansprüche, **dadurch gekennzeichnet, dass** die genannte geneigte Position eine statische Position des genannten halbfertigen Behälters (4, 4') ist.

8. Verfahren nach einem der vorhergehenden Ansprüche, **dadurch gekennzeichnet, dass** der genannte Formschritt einen Endblasvorgang, in einer Endbearbeitungsform, eines Glasrohlings umfasst, der aus der genannten geschmolzenen Glasmasse erhalten wird.

9. Verfahren nach einem der vorhergehenden Ansprüche, **dadurch gekennzeichnet, dass** dem genannten Endblasvorgang ein Vorformvorgang vorausgeht, um den genannten Rohling, in einer Rohlingform, durch Pressen oder durch Blasen der genannten geschmolzenen Glasmasse zu erhalten.

10. Verfahren nach einem der Ansprüche 8 oder 9, **dadurch gekennzeichnet, dass** es vor dem genannten Vorgang zur Bearbeitung der genannten Innenfläche (7, 7') einen Schritt der Extraktion des halbfertigen Behälters (4, 4') aus der Endbearbeitungsform umfasst.

11. Verfahren nach einem der vorhergehenden Ansprüche, **dadurch gekennzeichnet, dass** in dem genannten Abkühlschritt der genannte halbfertige Behälter (4, 4') in einen Belüftungsluftstrom platziert wird.

12. Verfahren nach einem der vorhergehenden Ansprüche, **dadurch gekennzeichnet, dass** am Ende des Formschritts ein Greifmittel den halbfertigen Behälter (4, 4') von der genannten Außenfläche (8, 8') greift und dann ein Trägermittel den genannten halbfertigen Behälter (4, 4') in der genannten geneigten Position hält.

13. Verfahren nach einem der vorhergehenden Ansprüche, **dadurch gekennzeichnet, dass**, sobald das Greifmittel den halbfertigen Behälter (4, 4') von der genannten Außenfläche (8, 8') gegriffen hat, ein Neigungsmittel bewirkt, dass der genannte halbfertige Behälter (4, 4') einer Orientierungsänderung unterworfen wird, um ihn in die genannte geneigte Position zu führen, bevor das genannte Trägermittel den genannten halbfertigen Behälter in der genannten geneigten Position hält.

14. Verfahren nach einem der vorhergehenden Ansprüche, **dadurch gekennzeichnet, dass** es vollständig automatisiert ist.

15. Anlage zur Herstellung eines Glasbehälters aus einer geschmolzenen Glasmasse, umfassend eine Station zum Formen (1, 1') der genannten geschmolzenen Glasmasse, um einen halbfertigen Behälter (4, 4') zu erhalten, umfassend eine Glashülle (5, 5'), welche einen inneren Hohlraum (6, 6') begrenzt und eine Innenfläche (7, 7'), die gegenüber dem genannten inneren Hohlraum (6, 6') angeordnet ist, und eine gegenüberliegende Außenfläche (8, 8') aufweist, und **dadurch gekennzeichnet, dass** sie Abkühlmittel umfasst, die es ermöglichen, den genannten halbfertigen Behälter (4, 4') in einen Übergangszustand zu bringen, in dem das Glas, das die genannte Außenfläche (8, 8') bildet, ausreichend viskos ist, damit sich die genannte Außenfläche (8, 8') unter der Einwirkung der Schwerkraft im Wesentlichen nicht verformt, während das Glas, das die genannte Innenfläche (7, 7') bildet, noch ausreichend flüssig ist, um im Gegensatz dazu die Verformung der genannten Innenfläche (7, 7') unter der Einwirkung der Schwerkraft gestatten zu können, und dadurch, dass sie Mittel zur Bearbeitung der genannten Innenfläche (7, 7') umfasst, die dafür ausgelegt sind, während einer vorherbestimmten Zeit den genannten halbfertigen Behälter (4, 4') in einer geneigten Position in Bezug auf seine vertikale Ausgangsposition zu halten, um eine Modifikation der Form der genannten Innenfläche (7, 7') durch die Bewegung (d) des Glasbehälters unter der Einwirkung der Schwerkraft zu bewirken, während sich der halbfertige Behälter (4, 4') in dem genannten Übergangszustand befindet.

16. Anlage nach dem vorhergehenden Anspruch, **dadurch gekennzeichnet, dass** die genannten Bearbeitungsmittel ein Mittel zum Greifen des genannten halbfertigen Behälters (4, 4') über die genannte Außenfläche (8, 8') sowie ein Trägermittel umfassen, um den genannten halbfertigen Behälter (4, 4') in der genannten geneigten Position zu halten.

17. Anlage nach dem vorhergehenden Anspruch, **dadurch gekennzeichnet, dass** die genannten Bearbeitungsmittel ein Neigungsmittel umfassen, das dafür ausgelegt ist, um zu bewirken, dass der genannte halbfertige Behälter einer Orientierungsänderung unterworfen wird, um ihn in die genannte geneigte Position zu führen.

## Claims

1. A method of fabricating a glass container (1, 1') from a mass of molten glass, the method comprising a forming step for forming said mass of molten glass in order to obtain a semi-finished container (4, 4') comprising a glass shell (5, 5') that defines an inside cavity (6, 6') and that presents an inside face (7, 7') placed facing said inside cavity (6, 6') and an opposite, outside face (8, 8'), the method being **characterized in that** it comprises a cooling step for cooling the semi-finished container (4, 4'), during which said semi-finished container (4, 4') is taken to a transient state in which the glass forming said outside face (8, 8') is sufficiently viscous for said outside face (8, 8') not to deform perceptibly under the effect of gravity, while the glass forming said inside face (7, 7') is still sufficiently fluid to be capable, on the contrary, of allowing said inside face (7, 7') to deform under the effect of gravity, and **in that** it includes a shaping operation for shaping said inside face (7, 7') while the semi-finished container (4, 4') is in said transient state, during which operation the semi-finished container (4, 4') is maintained for a predetermined time in an inclined position that is inclined relative to its upright vertical position in order to cause the shape of said inside face (7, 7') to be modified by movement (d) of the glass under the effect of gravity.

2. A method according to the preceding claim, **characterized in that**, in said transient state, the viscosity of the glass forming said outside face (8, 8') is greater than 10^{7.6} dPa.s, while the viscosity of the glass forming said inside face (7, 7') is less than or equal to 10^{7.6} dPa.s.

3. A method according to either preceding claim, **characterized in that**, in said transient state:
- the temperature Te of said outside face (8, 8') lies substantially in the range 550°C to 650°C; and
- the temperature Ti of said inside face (7, 7') lies substantially in the range 750°C to 1200°C.

4. A method according to any preceding claim, **characterized in that**, during said operation of shaping said inside face (7, 7'), the shape of said inside face (7, 7') by movement (d) of the glass is modified solely under the effect of gravity.

5. A method according to any preceding claim, **characterized in that** said inclined position corresponds to an inclination (I) of the semi-finished container (4, 4') at 90° relative to said upright vertical position.

6. A method according to any one of claims 1 to 4, **characterized in that** said inclined position corresponds to an inclination (I) of the semi-finished container (4, 4') at 180° relative to said upright vertical position.

7. A method according to any preceding claim, **characterized in that** said inclined position is a static position of said semi-finished container (4, 4').

8. A method according to any preceding claim, **characterized in that** said forming step comprises a final blowing operation in which a glass blank obtained from said mass of molten glass is blown in a finish mold.

9. A method according to the preceding claim, **characterized in that** said final blowing operation is preceded by a preforming operation for obtaining said blank by pressing or blowing said mass of molten glass in a paraison mold.

10. A method according to claim 8 or claim 9, **characterized in that**, prior to said operation of shaping said inside face (7, 7'), the method includes a step of extracting the semi-finished container (4, 4') from the finish mold.

11. A method according to any preceding claim, **characterized in that**, during said cooling step, said semi-finished container (4, 4') is placed in a stream of ventilation air.

12. A method according to any preceding claim, **characterized in that**, at the end of the forming step, grip means take hold of the semi-finished container (4, 4') via said outside face (8, 8'), and then support means maintain said semi-finished container (4, 4') in said inclined position.

13. A method according to the preceding claim, **characterized in that**, once said grip means have taken hold of the semi-finished container (4, 4') via said outside face (8, 8'), tilt means cause said semi-finished container (4, 4') to change its orientation so as to bring it into said inclined position, prior to said support means maintaining said semi-finished container in said inclined position.

14. A method according to any preceding claim, **characterized in that** it is fully automatic.

15. An installation for fabricating a glass container from a mass of molten glass, the installation comprising a forming station (1, 1') for forming said mass of molten glass in order to obtain a semi-finished container (4, 4') comprising a glass shell (5, 5') defining an inside cavity (6, 6') and presenting an inside face (7, 7') placed facing said inside cavity (6, 6') and an opposite, outside face (8, 8'), the installation being **characterized in that** it comprises cooling means suitable for bringing said semi-finished container (4, 4') into a transient state in which the glass forming said outside face (8, 8') is sufficiently viscous for said outside face (8, 8') not to deform perceptibly under the effect of gravity, while the glass forming said inside face (7, 7') is still sufficiently fluid to be capable, on the contrary, of allowing said inside face (7, 7') to deform under the effect of gravity, and **in that** it comprises shaper means for shaping said inside face (7, 7'), which means are designed to maintain for a predetermined time said semi-finished container (4, 4') in an inclined position that is inclined relative to its upright vertical position so as to cause the shape of said inside face (7, 7') to be modified by movement (d) of the glass under the effect of gravity while the semi-finished container (4, 4') is in said transient state.

16. An installation according to the preceding claim, **characterized in that** said shaper means comprise grip means for gripping said semi-finished container (4, 4') via said outside face (8, 8'), together with support means for maintaining the semi-finished container (4, 4') in said inclined position.

17. An installation according to the preceding claim, **characterized in that** said shaper means comprise tilt means designed to cause said semi-finished container to change orientation so as to bring it into said inclined position.
